# EUROPEAN PATENT SPECIFICATION

(11) **EP 1 885 103 B1**
(45) Date of publication and mention of the grant of the patent: **07.04.2010**
(21) Application number: 06300861.9
(22) Date of filing: 04.08.2006
(51) Int. Cl.: H04M 1/04, H04M 1/02, H04M 1/60

(54) **Mobile phone with support member**
Mobiles Telefon mit Stützvorrichtung
Téléphone mobile avec support

(43) Date of publication of application: 06.02.2008
(73) Proprietor: Motorola, Inc., A Corporation of the State of Delaware, Schaumburg, IL 60196 (US)
(72) Inventor: Ribeiro Dias, Alexandre, TOULOUSE 31400 (JP); Batut, Eric, 32450, SAINT MARTIN GIMOIS (FR); Elicegui, Lucas, 31500, TOULOUSE (FR)
(74) Representative: Joly, Jean-Jacques

(56) References cited:
- EP-A2- 1 594 293
- WO-A-96/38762
- DE-U1- 29 914 529
- US-A1- 2004 185 925
- BLUETOOTH AUDIO/VIDEO WORKING GROUP: "AUDIO/VIDEO REMOTE CONTROL PROFILE V1.0" BLUETOOTH DOC, [Online] 22 May 2003 (2003-05-22), XP002412760 Retrieved from the Internet: URL:http://bluetooth.com/NR/rdonlyres/0CD6 930C-302E-4BB8-ACA8-199066B47ADE/922/AVRCP Specv10.pdf> [retrieved on 2007-01-04]

## Description

### FIELD OF THE DISCLOSURE

The present disclosure generally relates to portable electronic devices, and more particularly, handheld electronic devices, for example, mobile telephones, with a support member.

### BACKGROUND

The use of mobile phones is increasing exponentially. Additional features, like, cameras, alarm clocks, Internet enablement such as Wireless Application Protocol (WAP), and Bluetooth services, are increasing the popularity of these devices. Mobile phones with cameras have become an attractive alternative to conventional cameras. However, unlike in the case of conventional cameras, there is a problem in stabilizing a mobile phone on a surface to capture a steady image. Moreover, it may be difficult for a person capturing an image with a mobile phone camera to be a part of the captured image.

There are various techniques for stabilizing mobile phones. Some mobile phones have at least one flat-side face and can be rested on a surface by placing their flat-side face on the surface. However, although the phone is stabilized, the captured image may get rotated at a right angle from the normal viewing plan of the screen. Secondly, the surface can limit the view of the camera lens while capturing an image. Moreover, due to the lack of a remote operation function in such mobile phone cameras, the operator has to press the 'click' button to capture an image. As a result, it may still be difficult for the operator to be a part of the captured image.

Another existing technique makes use of an external tripod. The mobile phone can be fixed on a mounting surface of the tripod and the tripod can be stabilized on a rest surface. However, in the case of most mobile phones, this technique can only be effective when the external tripod is large enough to hold a substantial portion of the mobile phone. This makes the portability of the external tripod a problem in implementing this technique.

Other examples concerning mobile phones with image capturing devices are given by the prior art documents WO 96 38762, DE 29914529 and the document entitled Bluetooth audio/video working group: "audio/video remote control profile V1.0" Bluetooth doc 22 May 2003.

### BRIEF DESCRIPTION OF THE FIGURES

The accompanying figures, where like reference numerals refer to identical or functionally similar elements throughout the separate views, and which, together with the detailed description below, are incorporated in and form part of the specification, serve to further illustrate various embodiments and explain various principles and advantages, all in accordance with the present invention.

FIG. 1 illustrates a mobile phone with a support member in a first configuration, in accordance with an embodiment of the present invention;

FIG. 2 illustrates the mobile phone with the support member in a second configuration, in accordance with another embodiment of the present invention;

FIG. 3 illustrates a block diagram of the mobile phone, in accordance with an embodiment of the present invention; and

FIG. 4 is a flow diagram illustrating a method for capturing an image with the mobile phone, in accordance with an embodiment of the present invention.

Skilled artisans will appreciate that elements in the figures are illustrated for simplicity and clarity and have not necessarily been drawn to scale. For example, the dimensions of some of the elements in the figures may be exaggerated, relative to other elements, to improve an understanding of embodiments of the present invention.

The present invention is defined according to the appended set of claims.

### DETAILED DESCRIPTION

Before describing in detail the mobile phone with a support member, in accordance with various embodiments of the present invention, it should be observed that the present invention resides primarily in combinations of method steps related to capturing an image by the mobile phone with a support member. Accordingly, the apparatus components and method steps have been represented, where appropriate, by conventional symbols in the drawings, showing only those specific details that are pertinent for an understanding of the present invention, so as not to obscure the disclosure with details that will be readily apparent to those with ordinary skill in the art, having the benefit of the description herein.

In this document, the terms "comprises," "comprising," or any other variation thereof, are intended to cover a non-exclusive inclusion, such that a process, method, article or apparatus that comprises a list of elements does not include only those elements but may include other elements that are not expressly listed or inherent in such a process, method, article or apparatus. An element proceeded by "comprises ... a" does not, without more constraints, preclude the existence of additional identical elements in the process, method, article or apparatus that comprises the element. The term "another," as used in this document, is defined as at least a second or more. The terms "includes" and/or "having", as used herein, are defined as comprising.

Various embodiments of the present invention provide a mobile phone with a support member. The mobile phone includes a housing, and a support member that is pivotally coupled to the housing. The support member is movable between a first configuration and a second configuration and is aligned substantially parallel to a side portion of the housing in the first configuration. Further, the support member extends at an angle relative to the side portion of the housing in the second configuration. The support member supports the housing in an upright position with respect to a surface when in the second configuration. Moreover, the mobile phone includes an image capturing device, which is integrated with the housing. The image capturing device can be controlled remotely.

In another embodiment, a mobile phone including a Bluetooth device and a reconfiguring module, in addition to the housing, the support member, and the image capturing device, is provided. The Bluetooth device is capable of functioning as a headset and a remote control. The reconfiguring module includes means for reconfiguring the Bluetooth device from the headset to the remote control, when the support member is in the second configuration. Further, the reconfiguring module includes means for enabling the image capturing device to capture images when instructed by means of the remote control.

In yet another embodiment, a method for capturing an image by the mobile phone is provided. The method includes reconfiguring the Bluetooth device from the headset to the remote control, when the support member is moved from the first configuration to the second configuration. Further, the method includes activating the image capturing device when the support member is moved from the first configuration to the second configuration. The method also includes capturing the image by the image capturing device when instructed by means of the remote control.

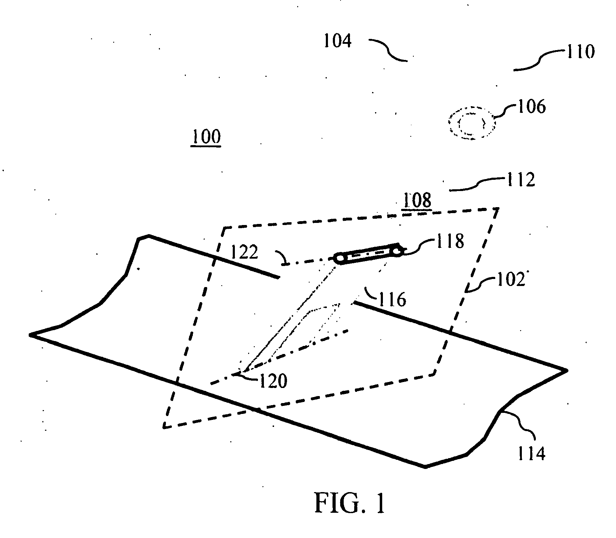

FIG. 1 illustrates a mobile phone 100 with a support member 102 in a first configuration, in accordance with an embodiment of the present invention. The mobile phone 100 also includes a housing 104, and an image capturing device 106. Examples of the mobile phone 100 include, but are not limited to, clam-shell mobile phones, candy-bar mobile phones, rail-guide mobile phones, slider mobile phones, and rotator mobile phones.

Various embodiments of the present invention are illustrated with reference to clam-shell mobile phones. However, it will be readily apparent to a person with ordinary skill in the art that the invention is equally applicable to other types of mobile phones as well. In an embodiment, the mobile phone 100 is a clam-shell phone, as shown in FIG. 1. In accordance with this embodiment, the housing 104 includes a first housing 110 and a second housing 112, and the second housing 112 includes the side portion 108.

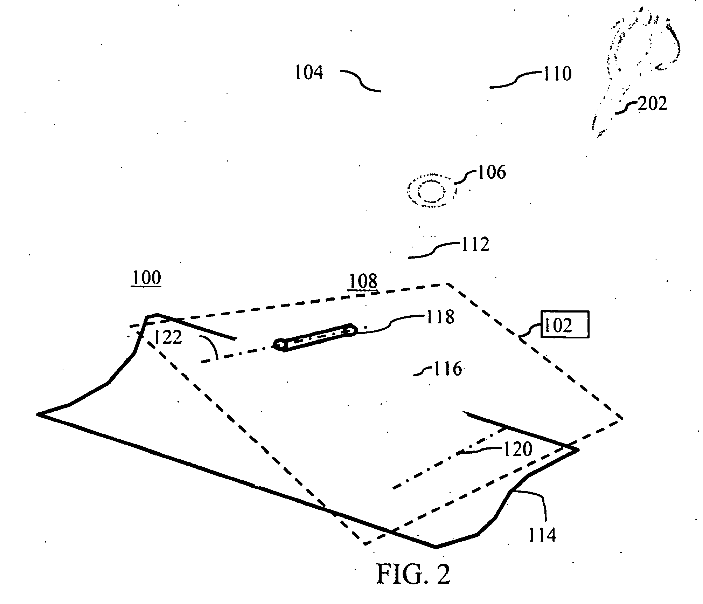

In the first configuration, the support member 102 is aligned substantially parallel to the side portion 108. The support member 102 can be opened to stabilize the mobile phone 100 on a surface 114. For an embodiment, the support member 102 can include a stand 116 and a hinge 118. For this embodiment, the stand has a first end 120 and a second end 122. Functions of the stand 116, the hinge 118, the first end 120, and the second end 122 are described in detail in conjunction with FIG. 2. The mobile phone 100 can be stabilized for various purposes, for example, to use the mobile phone 100 as a clock, to watch a video on the mobile phone 100, and to capture an image with the image capturing device 106 of the mobile phone 100.

The image capturing device 106 is integrated with the housing 104. For an embodiment, when the mobile phone 100 is a clam-shell phone, the image capturing device 106 can be integrated with the first housing 110, as shown in FIG. 1.

For an embodiment, the image captured by the image capturing device 106 can be a still image. For another embodiment, the image captured by the image capturing device 106 can be a moving image. For example, the image capturing device 106 is capable of taking photographs as well as recording movie clips. Further, the image capturing device 106 is capable of being controlled remotely. An example of an image capturing device 106 can be a camera that is built in the mobile phone 100.

FIG. 2 illustrates the mobile phone 100 with the support member 102 in a second configuration, in accordance with another embodiment of the present invention. The mobile phone 100 includes a Bluetooth device 202, in addition to the housing 104, the support member 102, and the image capturing device 106.

The support member 102 is movable between a first configuration and a second configuration. In the first configuration, the support member 102 is aligned substantially parallel to the side portion 108. In the second configuration, the support member 102 extends at a predefined angle relative to the side portion 108. Further, the support member 102 supports the housing 104 in an upright position when the support member 102 is in the second configuration.

In the second configuration, the housing 104 can be supported on the surface 114 by the support member 102. If the mobile phone 100 is a clam-shell mobile phone, the second housing 112 can be supported on the surface 114 by the support member 102. The support member 102 is designed in such a way that the first end 120 of the stand 116 rests on the surface 114, and the second end 122 of the stand 116 is pivotally coupled to the side portion 108 with the help of the hinge 118. The hinge 118 enables the stand 116 to open at predefined angles relative to the side portion 108. As a result, the support member 102 can be adjusted at any angle, within a predefined range, relative to the side portion 108. This helps a user of the mobile phone 100 to easily locate a desired view to capture an image with the image-capturing device 106. The stabilization of the housing 104, and therefore, the mobile phone 100, is clearly depicted in FIG. 2 by moving the support member 102 into the second configuration and resting the mobile phone on the surface 114.

The Bluetooth device 202 is capable of functioning as a headset and a remote control. According to an embodiment, an Audio Video Remote Control (AVRC) profile is implemented on the Bluetooth device 202, which enables the Bluetooth device 202 to function as the headset and the remote control. The Bluetooth device 202 is configured from the headset to the remote control when the support member 102 is moved to the second configuration. For an embodiment, the image capturing device 106 is automatically activated when the support member 102 is moved to the second configuration. Similarly, the image capturing device 106 is enabled to capture the image when instructed by the remote control, for example, the Bluetooth device 202.

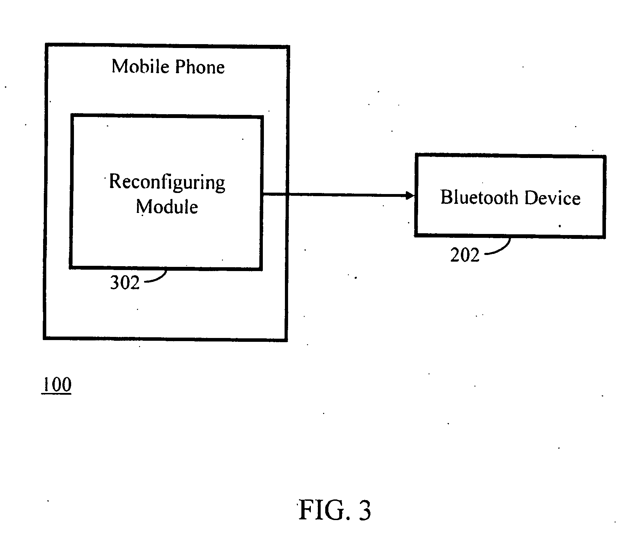

FIG. 3 illustrates a block diagram of the mobile phone 100, in accordance with an embodiment of the present invention. The mobile phone 100 is shown to include a reconfiguring module 302 that is capable of communicating wirelessly with the Bluetooth device 202.

The reconfiguring module 302 includes means for reconfiguring the Bluetooth device 202 from a headset to a remote control when the support member 102 is in the second configuration, hereinafter referred to as first Bluetooth device reconfiguration means. For example, when a user of the mobile phone 100 moves the support member 102 from the first configuration to the second configuration, the first Bluetooth device reconfiguration means reconfigures the Bluetooth device 202 from the headset to the remote control. The reconfiguring module 302 also includes means for enabling the image capturing device 106 to capture the images when instructed by means of the remote control, hereinafter referred to as image capturing device enabling means. For example, the image capturing device enabling means enables the image capturing device 106 to be controlled remotely by the Bluetooth device 202, to capture the image when instructed by means of the Bluetooth device 202. An example of the first Bluetooth device reconfiguration means and image capturing device enabling means can be a processor.

For an embodiment, the reconfiguring module 302 also includes means for automatically activating the image capturing device 106 when the support member 102 is in the second configuration, hereinafter referred to as image capturing device activating means. In this embodiment, the user is not required to manually activate the image capturing device 106. The image capturing device activating means activates the image capturing device 106 automatically when the user moves the support member 102 from the first configuration to the second configuration. An example of the image capturing device activating means can be a processor.

For an embodiment, the reconfiguring module 302 also includes means for reconfiguring the mobile phone 100 into a slave device when the support member 102 is in the second configuration, hereinafter referred to as mobile phone reconfiguring means. In this embodiment, the mobile phone 100 can be controlled by the Bluetooth device 202. An example of mobile phone reconfiguring means includes, but is not limited to, a processor.

For an embodiment, the reconfiguring module 302 also includes means for reconfiguring the Bluetooth device 202 from the remote control to the headset when a call is received at the mobile phone 100 while the support member 102 is in the second configuration, hereinafter referred to as second Bluetooth device reconfiguring means. For example, when the user receives a call while the support member 102 is in the second configuration, the second Bluetooth device reconfiguring means will reconfigure the Bluetooth device 202 to the headset, such that the user can operate the headset to attend the call. In this embodiment, the reconfiguring module 302 also includes means for reconfiguring the Bluetooth device 202 from the headset to the remote control when the call ends while the support member 102 is in the second configuration, hereinafter referred to as third Bluetooth device reconfiguring means. For example, when the user ends the call while the support member 102 is in the second configuration, the third Bluetooth device reconfiguring means reconfigures the Bluetooth device 202 to the remote control, such that the user can resume capturing images when the call ends. An example of the second Bluetooth device reconfiguring means and third Bluetooth device reconfiguring means can be a processor.

For an embodiment, the reconfiguring module 302 also includes means for de-activating the image capturing device 106 when a call is received at the mobile phone 100 while the support member 102 is in the second configuration, hereinafter referred to as image capturing device de-activating means. For example, when the user receives a call while the support member 102 is in the second configuration, then the image capturing device de-activating means de-activates the image capturing device 106. For this embodiment, the reconfiguring module 302 also includes means for re-activating the image capturing device 106 when the call ends while the support member 102 is in the second configuration, hereinafter referred to as image capturing device re-activating means. For example, when the user ends the call while the support member 102 is in the second configuration, the image capturing device re-activating means re-activates the image capturing device 106, such that the user can resume capturing images when the call ends. Examples of the image capturing device de-activating means and image capturing device re-activating means include, but are not limited to, a processor.

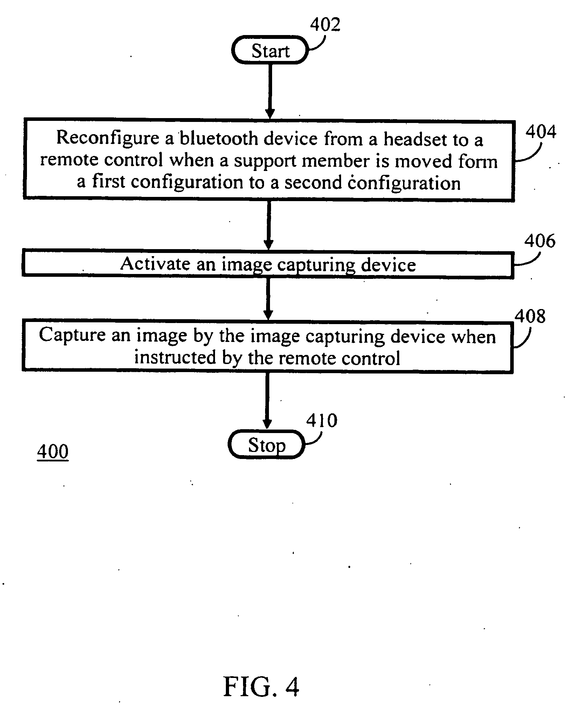

FIG. 4 is a flow diagram 400 illustrating a method for capturing an image with the mobile phone 100, in accordance with an embodiment of the present invention. To describe the flow diagram 400, reference will be made to FIGs. 1, 2 and 3, although it is understood that the flow diagram 400 can be implemented with reference to any other suitable embodiment of the invention. In addition, the flow diagram 400 can contain a greater or fewer number of steps than shown in FIG. 4.

At step 402, the method for capturing an image with the mobile phone 100 is initiated. At step 404, the Bluetooth device 202 is reconfigured from the headset to the remote control when the support member 102 is moved from the first configuration to the second configuration. The Bluetooth device 202 is reconfigured to the remote control by the first Bluetooth device reconfiguration means. At step 406, the image capturing device 106 is activated by the image capturing device activating means. For an embodiment, the image capturing device enabling means enables the image capturing device 106 to capture the image when instructed by means of the remote control. At step 408, an image is captured by the image capturing device 106 when instructed by means of the remote control. For an embodiment, the image can be a still image. For another embodiment, the image can be a moving image. Thereafter, the method terminates at step 410.

For an embodiment, the Bluetooth device 202 is reconfigured from the remote control to the headset when a call is received at the mobile phone 100 while the support member 102 is in the second configuration. The second Bluetooth device reconfiguration means reconfigures the Bluetooth device 202. For this embodiment, the Bluetooth device 202 is reconfigured from the headset to the remote control when the call ends while the support member 102 is in the second configuration. The third Bluetooth device reconfiguration means reconfigures the Bluetooth device 202.

Further, to illustrate the invention, an exemplary method for capturing an image by the mobile phone 100 is described. The user rests the mobile phone 100 on a surface 114 by moving the support member 102 to the second configuration. As a result, the first Bluetooth device reconfiguration means reconfigures the Bluetooth device 202 from the headset to the remote control. Further, the mobile phone reconfiguring means reconfigures the mobile phone 100 to a slave device, such that the mobile phone 100 can be controlled by means of the remote control. Moreover, the image capturing device activating means automatically activates the image capturing device 106. Furthermore, the image capturing device enabling means enables the image capturing device 106 to capture the images when instructed by means of the remote control. The image can be a still image or a moving image. The user can open the support member 102 at any angle within a predefined range, and rest the mobile phone 100 on the surface 114 to locate a desired view for capturing an image. In the event the user wants to be included in the captured image, the user can move into the view and instruct the image capturing device 106 to capture the image by using the Bluetooth device 202.

When a call is received at the mobile phone 100 while the support member 102 is in the second configuration, the second Bluetooth device reconfiguring means reconfigures the Bluetooth device 202 from the remote control to the headset. Further, the image capturing device de-activating means de-activates the image capturing device 106. As a result, the user can attend to the call by using the Bluetooth device 202 as the headset. When the user ends the call, the third Bluetooth device- reconfiguring means reconfigures the Bluetooth device 202 to the remote control, to enable the user to capture the image by using the Bluetooth device 202 as a remote control. Further, the image capturing device re-activating means re-activates the image capturing device 106 when the call ends. The user can again get back to capturing the image by using the Bluetooth device 202 as the remote control.

As described above, various embodiments of the present invention provide a method and system for capturing an image with a mobile phone. Various embodiments of the present invention provide several advantages. One of the advantages is that the lens of the image capturing device can be raised substantially above the surface with the support member in the second configuration. This reduces restrictions in locating a view, caused by the surface on which the mobile phone rests. Further, the invention enables the user to vary the view for capturing the image by varying the angle of the support member, relative to the side portion, in the second configuration. Another advantage is that the invention provides an integrated and portable solution for stabilizing mobile phones. The user can carry the mobile phone with the support member in the first configuration, and move the support member to the second configuration to stabilize the mobile phone. Moreover, the present invention enables the user to remotely capture an image with the Bluetooth device. Moreover, the user is not required to carry a separate device to function as the remote control for the image capturing device, as the present invention enables the Bluetooth device, which is used as a headset, to function as a remote control as well.

It will be appreciated that the mobile phone with a support member described herein may comprise one or more conventional processors and unique stored program instructions that control the one or more processors, to implement, in conjunction with certain non-processor circuits, some, most, or all of the functions of the system described herein. The non-processor circuits may include, but are not limited to, signal drivers, clock circuits, power source circuits, and user input devices. As such, these functions may be interpreted as steps of a method to capture an image by the mobile phone with support member. Alternatively, some or all the functions could be implemented by a state machine that has no stored program instructions, or in one or more application-specific integrated circuits (ASICs), in which each function, or some combinations of certain of the functions, are implemented as custom logic. Of course, a combination of the two approaches could also be used. Thus, methods and means for these functions have been described herein.

It is expected that one of ordinary skill, notwithstanding possibly significant effort and many design choices motivated by, for example, available time, current technology and economic considerations, when guided by the concepts and principles disclosed herein, will be readily capable of generating such software instructions, programs and ICs with minimal experimentation.

In the foregoing specification, the invention and its benefits and advantages have been described with reference to specific embodiments. However, one of ordinary skill in the art would appreciate that various modifications and changes can be made without departing from the scope of the present invention, as set forth in the claims below. Accordingly, the specification and figures are to be regarded in an illustrative rather than a restrictive sense, and all such modifications are intended to be included within the scope of the present invention. The benefits, advantages, solutions to problems, and any element(s) that may cause any benefit, advantage or solution to occur or become more pronounced are not to be construed as critical, required or essential features or elements of any or all the claims. The invention is defined solely by the appended claims, including any amendments made during the pendency of this application, and all equivalents of those claims, as issued.

## Claims

1. A mobile phone comprising a housing (104), a support member (102) pivotally coupled to the housing (104), the support member (102) movable between a first configuration and a second configuration, the support member (102) supporting the housing (104) in an upright position when in the second configuration, **characterized by**
an image capturing device (106) integrated with the housing, the image capturing device (106) capable of being controlled remotely, and
a reconfiguring module (302) for wirelessly reconfiguring a remote device from headset functionality to image capturing device remote control functionality when the support member (102) is moved from the first configuration to the second configuration.

2. The mobile phone of claim 1, the support member (102) aligned substantially parallel to a side portion (108) of the housing (104) in the first configuration, the support member (102) extending at an angle relative to the side portion (108) of the housing (104) in the second configuration,
wherein the support member (102) comprises: a stand (116) for resting the mobile phone on a surface, wherein a first end of the stand (116) rests on the surface, and a second end of the stand (116) is coupled to the side portion (108) of the housing; and
a hinge (118) for pivotally coupling the second end with the side portion (108) of the housing (104), wherein the hinge (118) allows the stand (116) to open at predefined angles relative to the side portion (108) of the housing (104).

3. The mobile phone of claim 1 or claim 2,
the remote device is a Bluetooth device (202),
the reconfiguring module further **characterized by** reconfiguring the mobile phone (100) into a slave device when the support member (102) is moved from the first configuration to the second configuration, wherein the slave device can be controlled by the Bluetooth device.

4. The mobile phone of anyone of claims 1 to 3, wherein the reconfiguring module (302) further **characterized by** means for automatically activating the image capturing device (106) when the support member (102) is in the second configuration.

5. The mobile phone of claim 3, wherein the reconfiguring module (302) further **characterized by** means for enabling the image capturing device (106) to capture an image when instructed by the Bluetooth device.

6. The mobile phone of claim 3, wherein the reconfiguring module (302) further **characterized by**:
means for reconfiguring the Bluetooth device (202) from the image capturing device remote control functionality to the headset functionality when a call is received at the mobile phone; and
means for reconfiguring the Bluetooth device (202) from the headset functionality to the image capturing device remote control functionality when the call ends;
wherein the support member (102) is in the second configuration when the call is received and when the call ends.

7. The mobile phone of anyone of claims 1 to 6, wherein the reconfiguring module further **characterized by**:
means for de-activating the image capturing device (106) automatically when a call is received at the mobile phone (100); and
means for re-activating the image capturing device (106) automatically when the call ends;
wherein the support member (102) is in the second configuration when the call is received and when the call ends.

8. The mobile phone of anyone of claims 1 to 7, wherein an image captured by the image capturing device (106) is selected from the group comprising a still image and a moving image.

9. A method for capturing an image with a mobile phone (100), the mobile phone (100) comprising an image capturing device (106), and a support member (102) pivotally coupled to the housing (104), the support member (102) movable between a first configuration and a second configuration, the support member supporting the housing in an upright position when in the second configuration, **characterized by**:
wirelessly reconfiguring a Bluetooth device (202) from a headset to a remote control when the support member (102) is moved from the first configuration to the second configuration;
activating the image capturing device (106) when the support member is moved form the first configuration to the second configuration; and
capturing the image by the image capturing device (106) when instructed by the remote control.

10. The method of claim 9 further **characterized by**:
reconfiguring the Bluetooth device (202) from the remote control to the headset when a call is received at the mobile phone (100); and
reconfiguring the Bluetooth device (202) from the headset to the remote control when the call ends;
wherein the support member (102) is in the second configuration when the call is received and when the call ends.

11. The method of claim 9 or claim 10, wherein the image is selected from the group comprising a still image and a moving image.

## Patentansprüche

1. Mobiltelefon, umfassend ein Gehäuse (104) und ein mit dem Gehäuse (104) gelenkig verbundenes Stützelement (102), wobei das Stützelement (102) zwischen einer ersten Konfiguration und einer zweiten Konfiguration beweglich ist und wobei das Stützelement (102), wenn es sich in der zweiten Konfiguration befindet, das Gehäuse (104) in einer aufrechten Position stützt, **gekennzeichnet durch**
eine in das Gehäuse integrierte Bildaufnahmevorrichtung (106), wobei die Bildaufnahmevorrichtung (106) ferngesteuert werden kann, und
ein Rekonfigurationsmodul (302) zum drahtlosen Rekonfigurieren einer Fernvorrichtung von einer Headset-Funktionalität zu einer Bildaufnahmevorrichtung-Fernbedienungsfunktionalität, wenn das Stützelement (102) von der ersten Konfiguration zu der zweiten Konfiguration bewegt wird.

2. Mobiltelefon nach Anspruch 1, wobei das Stützelement (102) in der ersten Konfiguration im wesentlichen parallel zu einem Seitenabschnitt (108) des Gehäuses (104) ausgerichtet ist, wobei das Stützelement (102) in der zweiten Konfiguration in einem Winkel bezüglich des Seitenabschnittes (108) des Gehäuses (104) verläuft ist,
wobei das Stützelement (102) umfaßt: eine Stütze (116) zum Aufstellen des Mobiltelefons auf einer Fläche, wobei ein erstes Ende der Stütze (116) auf der Fläche ruht und ein zweites Ende der Stütze (116) mit dem Seitenabschnitt (108) des Gehäuses verbunden ist, und
ein Scharnier (118) zum gelenkigen Verbinden des zweiten Endes mit dem Seitenabschnitt (108) des Gehäuses (104), wobei das Scharnier (118) die Öffnung der Stütze (116) bei vorgegebenen Winkeln bezüglich des Seitenabschnittes (108) des Gehäuses (104) erlaubt.

3. Mobiltelefon nach Anspruch 1 oder 2,
wobei die Fernvorrichtung eine Bluetooth-Vorrichtung (202) ist und
wobei das Rekonfigurationsmodul ferner **gekennzeichnet ist durch** die Rekonfigurierung des Mobiltelefons (100) in eine Slave-Vorrichtung, wenn das Stützelement (102) von der ersten Konfiguration zu der zweiten Konfiguration bewegt wird, wobei die Slave-Vorrichtung **durch** die Bluetooth-Vorrichtung gesteuert werden kann.
wird, wobei die Slave-Vorrichtung **durch** die Bluetooth-Vorrichtung gesteuert werden kann.

4. Mobiltelefon nach einem der Ansprüche 1 bis 3, wobei das Rekonfigurationsmodul (302) ferner **gekennzeichnet ist durch** Mittel zum automatischen Aktivieren der Bildaufnahmevorrichtung (106), wenn sich das Stützelement (102) in der zweiten Konfiguration befindet.

5. Mobilfunktelefon nach Anspruch 3, wobei das Rekonfigurationsmodul (302) ferner **gekennzeichnet ist durch** Mittel zum Aktivieren der Bildaufnahmevorrichtung (106), um ein Bild aufzunehmen, wenn dies **durch** die Bluetooth-Vorrichtung beauftragt wird.

6. Mobilfunktelefon nach Anspruch 3, wobei das Rekonfigurationsmodul (302) ferner **gekennzeichnet ist durch**:
Mittel zum Rekonfigurieren der Bluetooth-Vorrichtung (202) von der Bildaufnahmevorrichtung-Fernbedienungsfunktionalität zur Headset-Funktionalität, wenn ein Anruf **durch** das Mobiltelefon empfangen wird, und
Mittel zum Rekonfigurieren der Bluetooth-Vorrichtung (202) von der Headset-Funktionalität zur Bildaufnahmevorrichtung-Fernbedienungsfunktionalität, wenn der Anruf endet,
wobei sich das Stützelement (102) in der zweiten Konfiguration befindet, wenn der Anruf empfangen wird und wenn der Anruf endet.

7. Mobiltelefon nach einem der Ansprüche 1 bis 6, wobei das Rekonfigurationsmodul ferner **gekennzeichnet ist durch**:
Mittel zum automatischen Deaktivieren der Bildaufnahmevorrichtung (106), wenn ein Anruf vom Mobiltelefon (100) empfangen wird, und
Mittel zum automatischen Reaktivieren der Bildaufnahmevorrichtung (106), wenn der Anruf endet,
wobei sich das Stützelement (102) in der zweiten Konfiguration befindet, wenn der Anruf empfangen wird und wenn der Anruf endet.

8. Mobiltelefon nach einem der Ansprüche 1 bis 7, wobei ein von der Bildaufnahmevorrichtung (106) aufgenommenes Bild aus der ein unbewegtes Bild und ein bewegtes Bild umfassenden Gruppe ausgewählt ist.

9. Verfahren zum Aufnehmen eines Bildes mit einem Mobiltelefon (100), wobei das Mobiltelefon (100) eine Bildaufnahmevorrichtung (106) und ein mit dem Gehäuse (104) gelenkig verbundenes Stützelement (102) umfaßt, wobei das Stützelement (102) zwischen einer ersten Konfiguration und einer zweiten Konfiguration bewegbar ist und wobei das Stützelement, wenn es sich in der zweiten Konfiguration befindet, das Gehäuse in einer aufrechten Position stützt, **gekennzeichnet durch**:
Rekonfigurieren einer Bluetooth-Vorrichtung (202) von einem Headset zu einer Fernbedienung, wenn das Stützelement (102) von der ersten Konfiguration zur zweiten Konfiguration bewegt wird,
Aktivieren der Bildaufnahmevorrichtung (106), wenn das Stützelement von der ersten Konfiguration zu der zweiten Konfiguration bewegt wird, und
Aufnehmen des Bildes **durch** die Bildaufnahmevorrichtung (106), wenn dies durch die Fernbedienung beauftragt wird.

10. Verfahren nach Anspruch 9, ferner **gekennzeichnet durch**:
Rekonfigurieren der Bluetooth-Vorrichtung (202) von der Fernbedienung zu dem Headset, wenn ein Anruf **durch** das Mobiltelefon (100) empfangen wird, und
Rekonfigurieren der Bluetooth-Vorrichtung (202) von dem Headset zu der Fernbedienung, wenn der Anruf endet,
wobei sich das Stützelement (102) in der zweiten Konfiguration befindet, wenn der Anruf empfangen wird und wenn der Anruf endet.

11. Verfahren nach Anspruch 9 oder 10, wobei das Bild aus der ein unbewegtes Bild und ein bewegtes Bild umfassenden Gruppe ausgewählt wird.

## Revendications

1. Téléphone mobile comprenant un boîtier (104), un élément de support (102) couplé de façon pivotante au boîtier (104), l'élément de support (102) étant mobile entre une première configuration et une deuxième configuration, l'élément de support (102) supportant le boîtier (104) dans une position redressée lorsqu'il se trouve dans la deuxième configuration, **caractérisé par** :
un dispositif de capture d'image (106) intégré au boîtier, le dispositif de capture d'image (106) pouvant être commandé à distance, et
un module de reconfiguration (302) pour reconfigurer un dispositif distant, par liaison sans fil, d'une fonctionnalité "casque d'écoute" à une fonctionnalité "commande à distance du dispositif de capture d'image" lorsque l'élément de support (102) est déplacé de la première configuration à la deuxième configuration.

2. Téléphone mobile selon la revendication 1, l'élément de support (102) étant aligné essentiellement parallèlement à une partie de côté (108) du boîtier (104) dans la première configuration, l'élément de support (102) s'étendant à un certain angle par rapport à la partie de côté (108) du boîtier (104) dans la deuxième configuration,
l'élément de support (102) comprenant : un pied (116) pour poser le téléphone mobile sur une surface, une première extrémité du pied (116) reposant sur la surface et une deuxième extrémité du pied (116) étant couplée à la partie de côté (108) du boîtier ; et
une charnière (118) pour coupler de façon pivotante la deuxième extrémité à la partie de côté (108) du boîtier (104), la charnière (118) permettant au pied (116) de s'ouvrir à des angles prédéfinis par rapport à la partie de côté (108) du boîtier (104).

3. Téléphone mobile selon la revendication 1 ou la revendication 2,
le dispositif distant étant un dispositif Bluetooth (202),
le module de reconfiguration étant, en outre, **caractérisé par le fait qu'**il reconfigure le téléphone mobile (100) en un dispositif esclave lorsque l'élément de support (102) est déplacé de la première configuration à la deuxième configuration, le dispositif esclave pouvant être commandé par le dispositif Bluetooth.

4. Téléphone mobile selon l'une quelconque des revendications 1 à 3, dans lequel le module de reconfiguration (302) est, en outre, **caractérisé par** des moyens pour activer automatiquement le dispositif de capture d'image (106) lorsque l'élément de support (102) se trouve dans la deuxième configuration.

5. Téléphone mobile selon la revendication 3, dans lequel le module de reconfiguration (302) est, en outre, **caractérisé par** des moyens pour permettre au dispositif de capture d'image (106) de capturer une image lorsqu'il en reçoit l'instruction du dispositif Bluetooth.

6. Téléphone mobile selon la revendication 3, dans lequel le module de reconfiguration (302) est, en outre, **caractérisé par** :
des moyens pour reconfigurer le dispositif Bluetooth (202) de la fonctionnalité "commande à distance du dispositif de capture d'image" à la fonctionnalité "casque d'écoute" lorsqu'un appel est reçu par le téléphone mobile ; et
des moyens pour reconfigurer le dispositif Bluetooth (202) de la fonctionnalité "casque d'écoute" à la fonctionnalité "commande à distance du dispositif de capture d'image" lorsque l'appel prend fin ;
l'élément de support (102) étant dans la deuxième configuration lorsque l'appel est reçu et lorsque l'appel prend fin.

7. Téléphone mobile selon l'une quelconque des revendications 1 à 6, dans lequel le module de reconfiguration (302) est, en outre, **caractérisé par** :
des moyens pour désactiver automatiquement le dispositif de capture d'image (106) lorsqu'un appel est reçu par le téléphone mobile (100) ; et
des moyens pour réactiver automatiquement le dispositif de capture d'image (106) lorsque l'appel prend fin ;
l'élément de support (102) étant dans la deuxième configuration lorsque l'appel est reçu et lorsque l'appel prend fin.

8. Téléphone mobile selon l'une quelconque des revendications 1 à 7, dans lequel une image capturée par le dispositif de capture d'image (106) est sélectionnée dans le groupe comprenant une image fixe et une image animée.

9. Procédé de capture d'une image avec un téléphone mobile (100), le téléphone mobile (100) comprenant un dispositif de capteur d'image (106), et un élément de support (102) couplé de façon pivotante au boîtier (104), l'élément de support (102) étant mobile entre une première configuration et une deuxième configuration, l'élément de support supportant le boîtier dans une position redressée lorsqu'il se trouve dans la deuxième configuration, **caractérisé** les étapes de :
reconfiguration d'un dispositif Bluetooth (202), par liaison sans fil, d'une fonctionnalité "casque d'écoute" à une fonctionnalité "commande à distance " lorsque l'élément de support (102) est déplacé de la première configuration à la deuxième configuration ;
activation du dispositif de capture d'image (106) lorsque l'élément de support est déplacé de la première configuration à la deuxième configuration ; et
capture de l'image par le dispositif de capture d'image (106) lorsque celui-ci en reçoit l'instruction du dispositif Bluetooth.

10. Procédé selon la revendication 9, **caractérisé, en outre, par** les étapes de :
reconfiguration du dispositif Bluetooth (202) de la fonctionnalité "commande à distance" à la fonctionnalité "casque d'écoute" lorsqu'un appel est reçu par le téléphone mobile (100) ; et
reconfiguration du dispositif Bluetooth (202) de la fonctionnalité "casque d'écoute" à la fonctionnalité "commande à distance" lorsque l'appel prend fin ;
l'élément de support (102) étant dans la deuxième configuration lorsque l'appel est reçu et lorsque l'appel prend fin.

11. Procédé selon la revendication 9 ou la revendication 10, dans lequel l'image est sélectionné dans le groupe comprenant une image fixe et une image animée.
